# EUROPEAN PATENT SPECIFICATION

(11) **EP 2 238 598 B1**
(45) Date of publication and mention of the grant of the patent: **26.06.2013**
(21) Application number: 08806894.5
(22) Date of filing: 21.08.2008
(51) Int. Cl.: F22B 1/06, F22B 1/16, F22B 37/12, F28D 7/04, F28F 9/013, F28F 9/02, G21C 1/02, G21C 1/32

(54) **NUCLEAR REACTOR WITH COMPACT PRIMARY HEAT EXCHANGER**
KERNREAKTOR MIT KOMPAKTEM PRIMÄRWÄRMETAUSCHER
RÉACTEUR NUCLÉAIRE AVEC UN ÉCHANGEUR DE CHALEUR PRIMAIRE COMPACT

(30) Priority: 22.08.2007 IT MI20071685
(43) Date of publication of application: 13.10.2010
(73) Proprietor: Del Nova Vis S.R.L., Milano (IT); Cinotti, Luciano, 16036 Recco (IT)
(72) Inventor: CINOTTI, Luciano, 16036 Recco (IT)
(74) Representative: Cernuzzi, Daniele
(86) International application number: PCT/IB2008/002170
(87) International publication number: WO 2009/024854

(56) References cited:
- EP-A- 0 362 156
- WO-A-2007/034290
- DE-A1- 1 551 504
- FR-A- 2 128 126
- GB-A- 1 013 084
- GB-A- 1 159 034
- GB-A- 1 365 577
- US-A- 3 012 547
- US-A- 3 267 906
- US-A- 3 768 554

## Description

### TECHNICAL FIELD

The present invention relates to a nuclear reactor, in particular, a liquid-metal-cooled nuclear reactor, equipped with one or more compact primary heat exchangers.

In particular, the present invention regards a reactor in which the primary heat exchangers, where the heat produced in the core is transferred from a primary fluid (liquid metal) to a secondary fluid (water), are installed within the same main tank of the reactor that also houses the core, namely in the space that, with the components of the reactor contained therein, is referred to as "primary system".

### BACKGROUND ART

The Italian patent application No. IT/2005 MI001752 shows a reactor of this type, in which a substantially cylindrical separation structure over the core delimits a central hot header and an annular cold header that surrounds the hot header; housed in the cold header is a plurality of integrated heat-exchange assemblies, each of which includes a pump, two heat exchangers arranged at the sides of the pump, and a caisson that houses the pump and the heat exchangers. Each integrated assembly has an inlet connected to the hot header via purposely provided channels for the primary fluid. The heat exchangers are tube-bundle heat exchangers with helical tubes.

This solution, like other as a whole similar ones (for example, the one described in the document No. EP0362156, with heat exchangers of different configuration), is not, however, free from drawbacks, above all in terms of overall dimensions, in particular, on account of the overall dimensions of the systems of channelling of the primary fluid, and on account of the fluid-dynamic and heat-exchange effectiveness of the heat exchangers.

In particular, helical-tube heat exchangers are relatively complex and costly to produce, and the tubes, albeit presenting an excellent capacity for absorbing the thermal gradients linked to their operation, require a particularly complex supporting system that can be damaged by the fluid-induced vibrations. Furthermore, to reduce the head losses of the primary fluid that circulates in transverse flow on the outside of the tubes, from the top down, it is necessary to limit the velocity thereof by spacing the tubes out a lot, with consequent increase in the dimensions of the heat exchanger.

The known solutions do not enable then the replacement of all the components housed within the primary system on account of the practical impossibility of uncovering the entire main tank and on account of the design of the components. In particular, the channels that connect the separation structure to the heat exchangers form a single body with the separation structure itself, rendering the assembly unremovable.

In addition, openings made in the roof, which are relatively extensive on account of the conformation of the heat-exchange assemblies, weaken the roof of the reactor.

The known solutions envisage then one inlet for the primary fluid from the top of the heat exchangers and an outlet from the bottom. In the event of failure of one or more tubes of a heat exchanger, the water/steam mixture (secondary fluid) at extremely high pressure will expand within the tube bundle with violent outrush, in general, both from the top part and from the bottom part of the heat exchanger. The mixture that comes out from the bottom, as it ascends on the outside of the heat exchanger, can cause displacement of large amounts of primary fluid with associated pressure waves that can cause damage to the structures of the reactor and in particular, to the more delicate ones, such as the fuel sheathes.

In other known reactors with a general configuration similar to the one described, tube-bundle heat exchangers are used with substantially vertical straight tubes, or substantially U-shaped tubes, which, however, do not solve the drawbacks referred to previously.

GB 1013084 discloses a reactor according to the preamble of claim 1.

### DISCLOSURE OF INVENTION

An aim of the present invention is to provide a nuclear reactor, in particular, a liquid-metal-cooled nuclear reactor, that overcomes the drawbacks of the known solutions that have been highlighted and presents advantages from a constructional and safety standpoint.

The present invention hence relates to a nuclear reactor, in particular a liquid-metal-cooled nuclear reactor, as defined in the annexed Claim 1 and, as regards its auxiliary characteristics and plant configurations, in the dependent claims.

### BRIEF DESCRIPTION OF THE DRAWINGS

The invention is described in the following non-limiting example of embodiment, with reference to the figures of the annexed drawings, wherein:
- Figure 1 is a partial schematic view in longitudinal section of a nuclear reactor in accordance with the invention;
- Figure 2 is a schematic view in longitudinal section of a heat exchanger installed in the reactor of Figure 1;
- Figure 3 is a schematic cross-sectional view of the heat exchanger of Figure 2, with parts removed for reasons of clarity;
- Figure 4 is a schematic perspective view of some heat-exchange tubes of the heat exchanger of Figure 2, connected to a delivery manifold and to a return manifold;

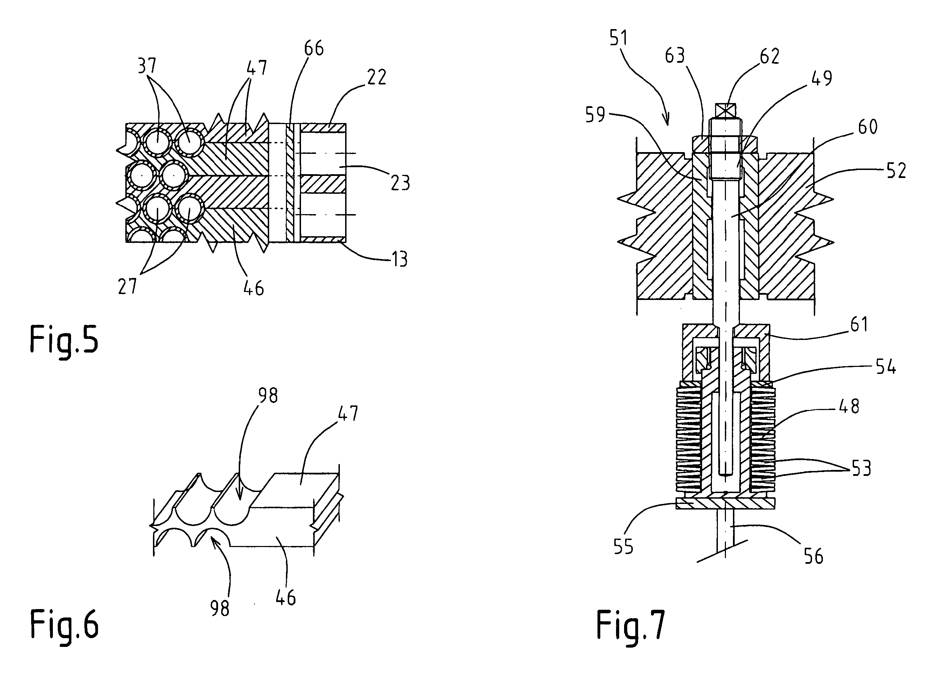

- Figures 5-7 show respective details at an enlarged scale of the heat exchanger of Figure 2;
- Figures 8-9 are, respectively, a view in elevation and a sectional view of a further detail of the heat exchanger of Figure 2;
- Figures 10-11 are, respectively, a view in elevation and a cross-sectional view of a further detail of the heat exchanger of Figure 2.

### BEST MODE FOR CARRYING OUT THE INVENTION

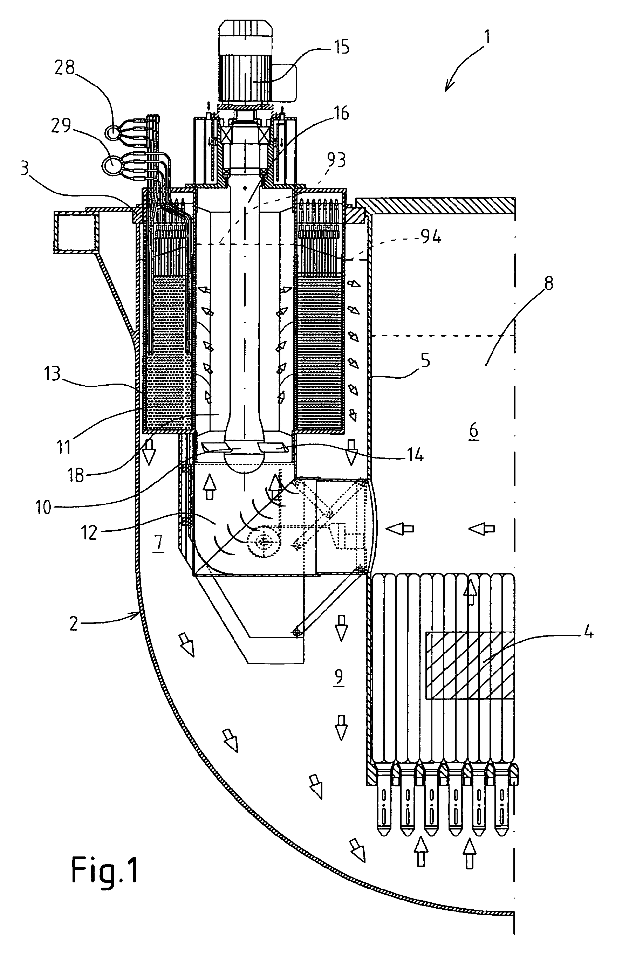

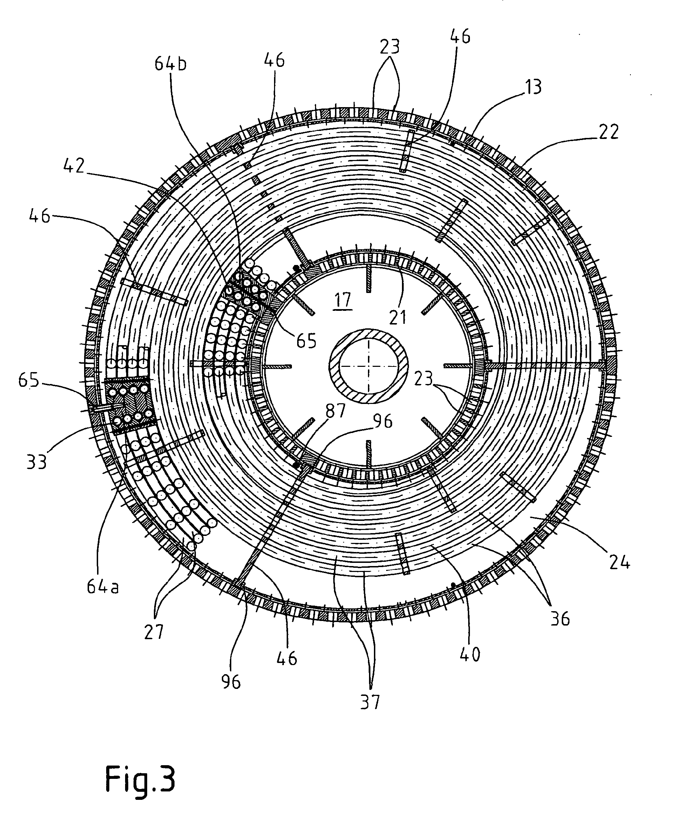

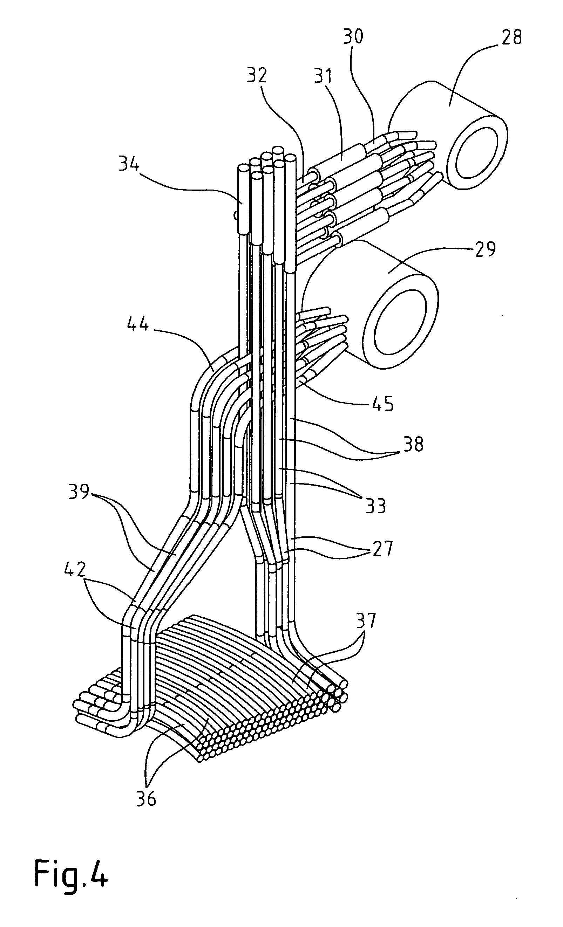

With reference to Figures 1-4, a nuclear reactor 1 comprises a main tank 2 covered by a roof 3 and containing within it a core 4 and a substantially cylindrical hydraulic separation structure 5, which delimits a hot header 6 and a cold header 7, in which a primary fluid 8 circulates for cooling the core 4. The cold header 7 is defined by an annular region 9 comprised between the tank 2 and the structure 5 and is consequently set around the hot header 6.

Housed within the tank 2 are pumps 10 for circulation of the primary fluid 8 and heat exchangers 11, which are traversed by the primary fluid 8 and transfer to a secondary fluid circulating in an external secondary circuit (which is known and not illustrated) the power generated in the core 4. Preferably, the primary fluid 8 is a liquid metal and in particular, a heavy liquid metal, for example lead, or a lead-bismuth eutectic, whilst the secondary fluid is water (which vaporizes in the heat exchange with the primary fluid) and hence the heat exchangers 11 are steam generators. A covering gas is present above the primary fluid 8 in the tank 2.

Housed within the structure 5 are various auxiliary devices, amongst which, for example, machines for transfer of the fuel, structures for supporting the instrumentation, and control rods, etc., not described for reasons of simplicity in so far they are known and are not relevant to the present invention.

The heat exchangers 11 are arranged entirely in the cold header 7 and are circumferentially spaced around the structure 5. In what follows, for reasons of simplicity, reference will be made to just one heat exchanger 11, remaining understood that the reactor 1 can house one or more heat exchangers 11.

The heat exchanger 11 extends substantially along a central vertical axis A and has a containment casing 13, which is connected, via a connection duct 12, to the structure 5 and houses within it a pump 10.

The pump 10 comprises an impeller 14 moved by a motor 15 via a shaft 16. The shaft 16 and the impeller 14 are set substantially along the axis A within a substantially cylindrical central internal zone 17 of the heat exchanger 11, with the impeller 14 preferably set at a bottom end of the zone 17. The pump 10 may be absent if it is envisaged that the reactor 1 functions in natural circulation of the primary fluid. The zone 17 defines a supply duct 18, which is set substantially along the axis A and is traversed substantially from the bottom upwards by the primary fluid entering the heat exchanger 11 and coming from the hot header 6.

Set within the zone 17 are longitudinal ribbings 19 substantially parallel to the axis A and radial flow deflectors 20 that project radially towards the inside in the zone 17.

The heat exchanger 11 has a pair of substantially cylindrical and coaxial sleeves 21, 22, which are provided with respective pluralities of holes 23 and define, respectively, a radially inner side wall (which internally delimits the zone 17) and a radially outer side wall (which constitutes an outer shell), which are substantially tubular and substantially coaxial, of the casing 13 and delimiting an annular zone 24.

Axially opposite ends of the annular zone 24 are closed by a bottom plate 25 and by a top plate 26 respectively, that are substantially annular and connect the sleeves 21, 22. The heat exchanger 11 is arranged through an opening 99 made through the roof 3, with the plate 26 set over the roof 3 on the outside of the tank 2.

The heat exchanger 11 comprises a plurality of heat-exchange tubes 27 in which the secondary fluid (water/steam) circulates and which are individually connected, via respective opposite ends, to a delivery manifold 28 and to a return manifold 29, which are set on the outside of the tank 2 above the roof 3.

Each tube 27 comprises a substantially plane spiral portion 37 wound about the axis A, a delivery branch 38 that connects a radially external end of the portion 37 to the manifold 28, and a return branch 39 that connects a radially internal end of the portion 37 to the manifold 29.

By "spiral portion" is meant a portion having a basically spiral shape or close to spiral shape, which is wound on itself and about a central axis (axis A) and which has a single plane of lie.

Each spiral portion 37 is constituted by a plurality of substantially concentric turns 36 set inside one another about the axis A and lying substantially in a common plane perpendicular to the axis A.

The spiral portions 37 are set on top of one another in a number of levels to form a substantially annular tube bundle 40. On each level there can be set the spiral portion 37 of just one tube 27, or else on each level there can be set the spiral portions 37 of two or more tubes 27, the turns of the different tubes 27 of the level being inserted (concatenated) in one another and lying in a common plane so that the n-th turn of one tube is followed by the n-th turn of the next tube, and so forth. In the example illustrated in Figures 1-4, two tubes 37 are provided on each level.

In the example illustrated, the delivery branch 38 comprises a substantially horizontal initial section 30, connected to the manifold 28 and provided with a hydraulic safety device 31 (which is known) for interruption of the flow in the case where a pre-set value is exceeded, and a prevalently vertical main section 33, connected, at the bottom, to the radially external end of the spiral portion 37 and, at the top, to the section 30 via a T-shaped connection portion 32 that proceeds at the top with a closure 34 provided to enable access within the tubes 27 for carrying out inspection and maintenance operations.

The return branch 39 comprises a substantially horizontal terminal section 44, connected to the manifold 29 and provided with a non-return valve 45, and a prevalently vertical main section 42 with variously shaped connection curves 43 and connected, at the bottom, to the radially internal end of the spiral portion 37 and, at the top, to the section 44.

The delivery branches 38 are arranged circumferentially, set alongside one another in a gap defined between the tube bundle 40 and the external sleeve 22, and the return branches 39 are arranged circumferentially, set alongside one another in a second gap delimited between the tube bundle 40 and the internal sleeve 21. The sections 33, 42 traverse the top plate 26 (to which they are seal-connected, for example, via brazing).

The spiral portions 37 are rigidly supported in a plurality of circumferential positions by respective longitudinal supports 46 arranged radially in the annular zone 24 and angularly spaced apart from one another.

Each support 46 comprises a plurality of horizontal elements 47, set radially with respect to the axis A and set on top of one another to form a column support 46 that extends vertically substantially throughout the height of the tube bundle 40.

Each element 47 is set between the spiral portions 37, set at two consecutive levels, and has two series of saddle-shaped seats 98, set on opposite faces of the element 47 and housing said spiral portions 37, set at consecutive levels.

Some supports 46 extend radially between the sleeves 21, 22 and are guided by pairs of reference elements 96 carried by the sleeves 21, 22 so as to keep the tube bundle 40 centred in the heat exchanger 11. Other supports 46 are connected to just one of the sleeves 21, 22 or are independent of the sleeves 21, 22 to provide greater flexibility for the tube bundle 40.

The heat exchanger 11 comprises an adjustable mechanical system 50 for pre-compression of the tube bundle 40, preferably located in the top part of the heat exchanger 11, in which the spiral portions 37 of the tubes 27 are packed tight and compressed by pre-tensioned elastic pusher elements 51, which are set between the tube bundle 40 and reaction brackets 52 fixed to the casing 13 of the heat exchanger 11 and act on the spiral portions 37 and/or on the supports 46 for gripping the tube bundle 40 axially (vertically).

In the non-limiting example illustrated, each element 51 comprises a spring pack 48 and an adjustment internal-thread/external-thread pair 49.

The spring pack 48 comprises one or more springs 53 carried by a supporting frame 54, which rests on a counterplate 55 welded to a top edge 56 of a wall 57, wound in a spiral about the axis A and set in the annular zone 24 on the tube bundle 40, and which presses directly on a top terminal support 46a, set at the top of the supports 46.

The internal-thread/external-thread pair 49 is installed on a reaction bracket 52, constrained to the sleeves 21, 22, and comprises a bushing 59, fitted on the bracket 52 and provided, inside, with an internal-screw portion, and a rod 60 which is threaded slidably in the bushing 59 and engages the internal-thread portion. The rod 60 acts via intermediate connection members 61 on the spring pack 48. The pre-load of the spring pack 48 is provided by acting on a top shank 62 of the rod 60 and clamping it with a locknut 63.

The heat exchanger 11 moreover comprises side supports 64a, 64b, which engage, respectively, the substantially vertical sections 33 and 42 of the tubes 27 to prevent/limit any horizontal displacements of the tubes 27. The supports 64a, 64b are arranged circumferentially and axially spaced and project radially from the sleeve 21 and from the sleeve 22, respectively, to which they are anchored, for example, via bolted connections 65.

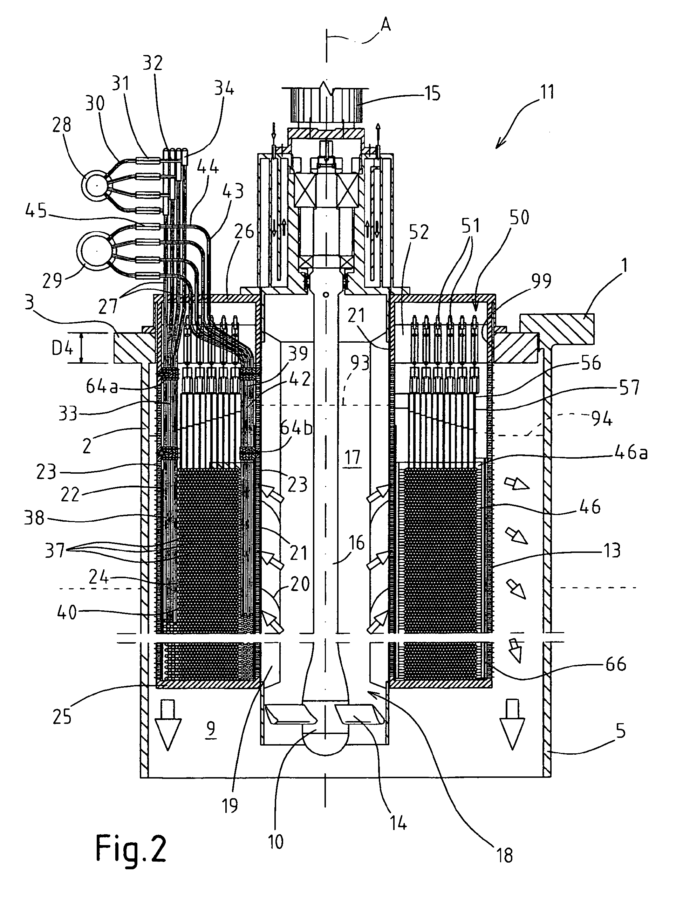

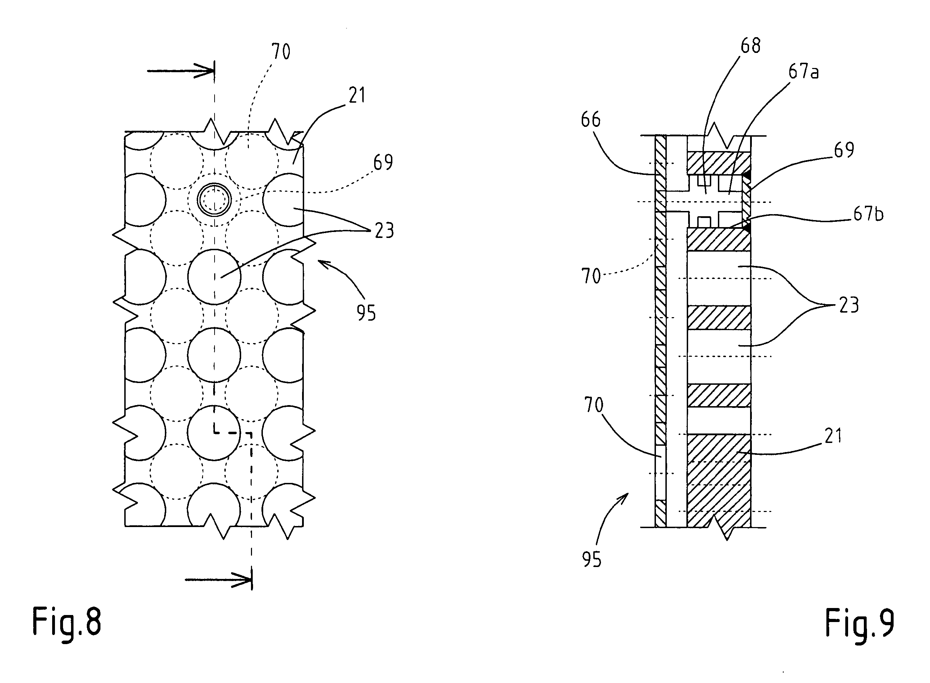

With reference to Figures 2, 8 and 9, the heat exchanger 11 includes a controlled-failure safety system 95, comprising a plurality of tiles 66 or curved protection walls arranged within the annular zone 24 and set facing the sleeves 21, 22 substantially throughout the height of the tube bundle 40. The tiles 66 are provided with guide pins 67a, housed so that they can slide in respective seats 67b formed in the sleeves 21, 22. The guide pins 67a carry punches 68 acting on pre-set mechanical resistance membranes 69 positioned in the seats 67b. The tiles 66 are provided with holes 70 staggered with respect to the holes 23 of the adjacent sleeve 21, 22, and are mobile for selective occlusion of the holes 23 of the adjacent sleeve 21, 22 when a pressure higher than a critical threshold is exerted on the tiles 66.

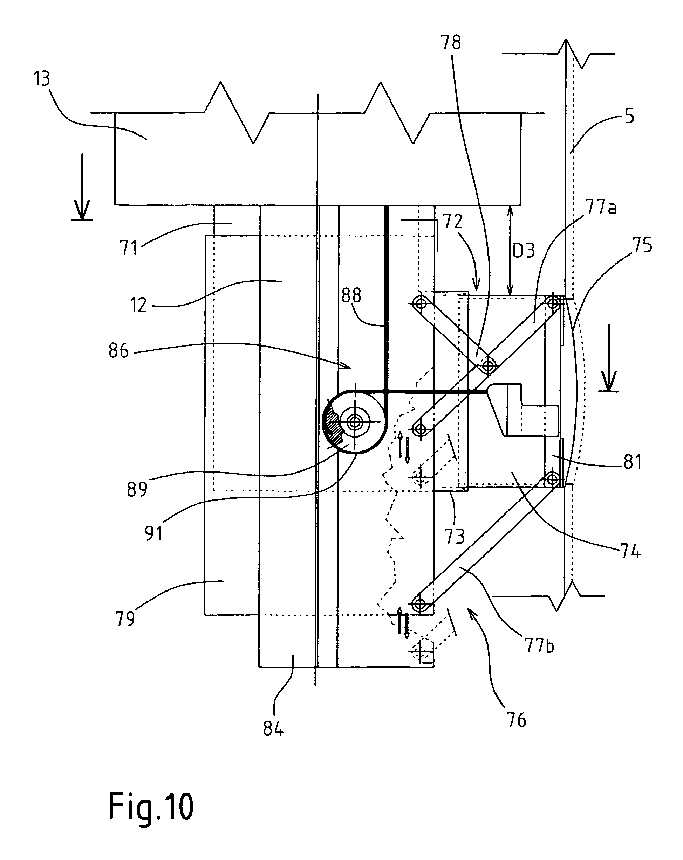

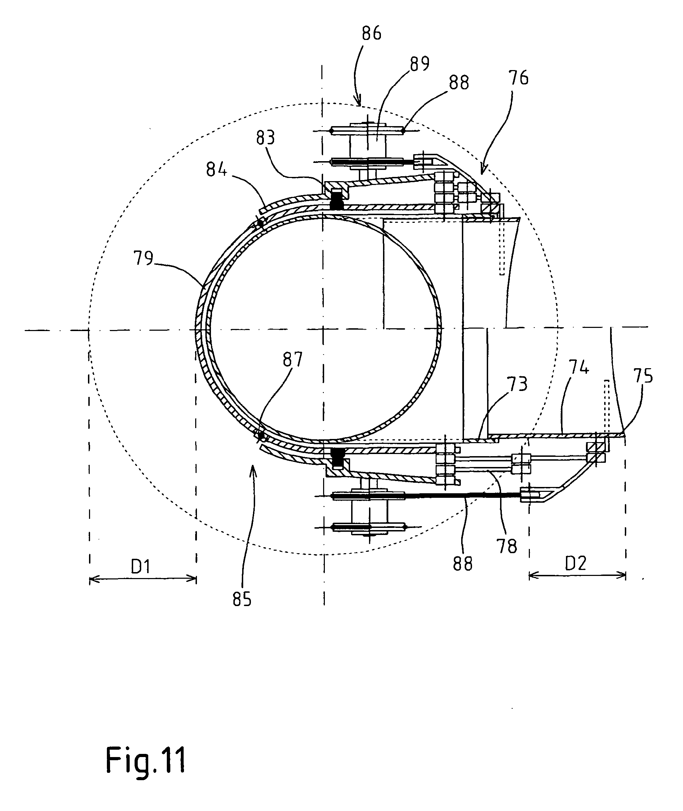

With particular reference to Figures 1, 10 and 11, the connection duct 12 comprises a substantially vertical section 71, fixed with respect to the bottom end of the heat exchanger 11, and a substantially horizontal telescopic portion 72 formed by two parts: a fixed duct 73 that forms a single body with the casing 13; and a mobile duct 74 that can slide in a fluid-tight way within the duct 73 and has a free end 75. The duct 74 is mobile, as represented in Figure 11, between a retracted position (indicated in the top half of Figure 11), where the duct 74 is contained within the overall dimensions of the cross section of the heat exchanger 11 (and specifically of the casing 13), and an extended position (indicated in the bottom half of Figure 11), in which the free end 75 of the duct 74 is in contact with the structure 5 and ensures releasable connection of the connection duct 12 to the structure 5.

The telescopic portion 72 is moved by a movement system 76 that enables the free end 75 of the portion 72 to approach/withdraw from the structure 5. The system 76 is immersed in the primary fluid and is configured in such a way as to keep the duct 74 set up against the structure 5 as a result of the buoyant force of the primary fluid on the system 76. When the duct 74 assumes the retracted position, also the system 76 is completely contained within the cross section of the heat exchanger 11.

In the example illustrated, the system 76 is a pantographic mechanical system, which comprises two pairs of equal and parallel rods 77a, 77b, set on opposite sides of the duct 74, two equal and parallel connecting rods 78, set on opposite sides of the duct 74, and a carriage 79, slidable parallel to the axis A (vertically) on the outside of the connection duct 12. Opposite ends of the rods 77a, 77b are hinged, at the top, to brackets 81, which are fixed with respect to the duct 74 and, at the bottom, to the carriage 79, which slides along guides 83 made on a structure 84 fixed to the bottom plate 25 of the heat exchanger 11. The connecting rods 78 are hinged at opposite ends to the structure 84 and to the central position of the rods 77a.

The system 76 comprises, for movement of the mobile duct 74, two independent actuation devices 85, 86 for approaching the duct 74 to the structure 5 and for retracting the duct 74 from the structure 5 respectively. Both devices 85, 86 are traction systems having respective tie-rod members arranged through the heat exchanger 11.

The approach device 85 comprises two rods 87 substantially parallel to the axis A and connected to the carriage 79, which traverse the heat exchanger 11 entirely and are set between the internal sleeve 21 and the tube bundle 40. The rods 87 traverse the top plate 26 of the heat exchanger 11 and connect up to an actuator set on the outside of the tank 2, which is known and not represented for reasons of simplicity. When the rods 87 are pulled upwards, the carriage 79 is raised, causing actuation of the pantographic system 76 and consequent horizontal displacement of the duct 74 towards the structure 5. The carriage 79 is designed in such a way as to receive a buoyant force from the primary fluid in which it is immersed, so that the action of approach of the connection duct 12 to the structure 5 is ensured (also) by the hydrostatic thrust exerted by the primary fluid on the carriage 79.

The retraction device 86 comprises two tie-rods 88, which act on respective double pulleys 89 that transmit the tensile force exerted by the tie-rods 88 on the brackets 81 and hence on the duct 74. The tie-rods 88 traverse the heat exchanger 11 and are set between the external sleeve 22 and the tube bundle 40 within guide tubes 90; the tie-rods 88 comprise respective flexible portions 91 (wire, belt, chain, etc.) at least in an area corresponding to the pulleys 89. Also the device 86 is connected to an actuator (not represented) located on the outside of the tank 2. The tensile force exerted by the tie-rods 88 causes horizontal retraction of the duct 74 within the overall dimensions of the cross section of the heat exchanger 11 for extraction of the heat exchanger 11 from the reactor 1. Once the system 76 emerges from the primary fluid, the weight of the system 76 and specifically of the carriage 79 tends to cause the duct 74 to retract further.

Suitable sealing devices (which are known and are not illustrated for reasons of simplicity) are provided between the fixed duct 73 and the mobile duct 74 and between the free end 75 and the structure 5.

In order to enable extraction of the heat-exchanger/pump assembly through the opening 99 also in the case where the duct 74 is not retractable on account of any mechanical blockage, the connection duct is sized in such a way as to satisfy the following geometrical conditions:
1) the radial distance D1 between the radially outermost part of the connection duct 12 and/or of the system 76 diametrally opposite to the structure 5 (in the specific example, the vertical portion of the carriage 79) and the horizontal projection of the casing 13, possibly increased by the play between the casing 13 and the opening 99, is greater than the length D2 of the section of the portion 72 that projects laterally from the projection of the casing 13 (i.e., than the distance between the free end 75 and the horizontal projection of the casing 13 measured along the side wall of the horizontal portion of the connection duct 12, in the case in point, of the duct 74);
2) the axial distance D3 (measured parallel to the axis A) between the top surface of the portion 72 and the bottom end of the casing 13 is greater than the thickness D4 of the roof 3 (i.e., than the depth of the opening 99 through the roof 3).

Extraction of the heat-exchanger/pump assembly in the event of mechanical blockage of the system 76 occurs then in the following way: the heat-exchanger/pump assembly is raised parallel to the axis A until the casing 13 is brought beyond the roof and the duct 74 is brought below and in the proximity of the roof 3, and then translated radially towards the outside until the free end 75 is brought within the vertical projection of the opening 99, and finally raised further and extracted altogether through the opening 99.

If the geometrical conditions indicated are satisfied, it is also possible to provide the heat exchanger 11 with a connection duct 12 without mobile parts and with the movement system 76. The connection duct 12, which is substantially L-shaped, will in any case be extractable together with the heat exchanger 11 through the opening 99.

In use, in normal conditions of operation of the reactor 1, the primary fluid at the outlet from the core 4 is conveyed radially in the connection duct 12 and traverses the supply duct 18 from the bottom upwards. The primary fluid then traverses the tube bundle 40 radially. The supply duct 18, with the ribbings 19 and the deflectors 20, and the sleeves 21, 22, with the respective holes 23, constitute as a whole conveying means for conveying the primary fluid through the heat exchanger 11 so that the primary fluid substantially crosses the tube bundle 40 radially. The secondary fluid circulates within the tubes 27 from the radially external end to the radially internal end of each spiral portion 37.

From the foregoing there emerge clearly the advantages of the present invention.
- The heat-exchanger/pump assembly constitutes a compact assembly.
- The positioning of the pump 10 in the bottom part of the heat exchanger 11 provides the necessary net positive suction head (NPSH) at the inlet to the pump itself.
- The supply from below of the heat exchanger 11, by preventing any risk of entrainment of covering gas of the reactor, enables the raise of the level of the heat exchanger 11 within the tank 2 and hence the increase in the difference of level with respect to the core 4, with consequent improvement in performance in natural circulation.
- The spiral shape of the heat-exchange tubes 27 presents the same advantages as the helical shape as regards absorption of any thermal expansion.
- The adoption of a tube bundle 40 with spiral-shaped tubes 27 and with radial flow of the primary fluid leads to a large section of passage for the primary fluid itself, with consequent possibility of limiting the velocity of the primary fluid even with the tubes positioned close together and a significant reduction in the volume of the heat exchanger (for example, indicatively half that of known helical-tube solutions).
- The reduction of velocity of the primary fluid and the lower number of arrays of tubes to be traversed (in a radial direction) enables a drastic reduction of the head losses of the primary fluid (indicatively ten times less than those of known helical-tube solutions).
- A better uniformity of radial velocity of the primary fluid between the inner part of the heat exchanger and the outer part can be obtained by varying the radial pitch between the spirals: larger in the inner part and smaller in the outer part.
- Both the construction and the assembly of tubes with spiral portions are much simpler and less costly than those of helical tubes.
- The system 50 of pre-compression with elastic elements, which are pre-loaded upon assembly and sized in such a way as to work always in the elastic field in the various possible configurations of operation, ensures a predefined compression between the spiral portions 37 and the supports 46 within a range defined by their elastic characteristic. The system 50 also ensures a limit to the maximum displacements that can take place, for example, following upon failure of a tube 27.
- To facilitate relief of the water/steam mixture towards the top of the heat exchanger 11, the top plate 26 is positioned at a certain distance from the top of the tube bundle 40, which is open at the top. There is prevented bypass of the heat exchanger 11 in the top part, thanks to the walls 57, which (in addition to distributing the force of compression exerted by the pusher elements 51 on the supports 46) rest upon the supports 46 and the top edge of which terminates at a level higher than the free surface 93 of the primary fluid within the heat exchanger 11.
- The entire external part of the heat exchanger 11 is substantially at the temperature of the cold header, and hence any risk of heating of the main tank 2 is prevented during normal operation of the reactor 1.
- Positioning of the manifolds 28, 29 outside the tank 2 rules out the possibility of any catastrophic release of large amounts of secondary fluid within the reactor 1.
- In normal operation, the primary fluid circulates with reduced head loss through the holes 23 of the sleeves 21, 22 and through the holes 70 of the tiles 66 set up against them. In the event of failure of one or more tubes 27, the violent local increase in the pressure acting on the tiles 66 will cause, under the action of the punches 68, yielding of the membranes 69 bringing the tiles 66 into contact with the sleeves 21, 22 and hence, thanks to the staggered perforation of the tiles 66 and sleeves 21, 22, to the interruption of the radial flow of primary fluid. The result is that, in the event of accident, any possible strong pressure waves will be contained within the heat exchanger 11, which is designed for pressures of the order of tens of atmospheres. The mixture constituted by primary fluid, water at boiling point and steam will be released through the holes 23 of the sleeves 21, 22 only from the top part of the heat exchanger 11, which is without tiles 66, and hence in the proximity of the free surface 94 of the primary fluid in the cold header 7. Consequently, any possible pressure waves will of course be dampened by the free surface 94, and large currents of primary fluid set in motion by the injection of steam in depth will be prevented.
- The movement of the duct 74 is simple and reliable. Irrespective of the external actuation, the pantographic system 76 is always active thanks to the buoyant force of the carriage 79 immersed in the primary fluid. The system 76 is also mechanically reversible and can thus also compensate for any expansion of the structure 5, maintaining the force of contact between the structure 5 and the duct 74 constant.
- The heat-exchanger/pump assembly can be extracted from the reactor thanks to the system 76, but remains extractable also in the event of mechanical blockage of the system 76 or if the system 76 is not envisaged, thanks to the particular sizing of the connection duct 12.
- It is possible to extract from the tank 2 either the pump 10 alone, or the heat exchanger 11 (including the pump 10 and the connection duct 12) or else the structure 5.
- In the case of failure of the main tank 2, the level of the primary fluid in the tank 2 drops, but the circulation of the primary fluid is still guaranteed through the bottom spiral portions 37 of the tube bundle 40.

Finally, it is understood that numerous modifications and variations can be made to the reactor described and illustrated herein, without this implying any departure from the scope of the annexed claims.

## Claims

1. A nuclear reactor (1), in particular a liquid-metal-cooled nuclear reactor, having a hot header (6) over a core (4) and a cold header (7) surrounding the hot header, separated by a separation structure (5) and in which a primary fluid (8) circulates for cooling the core; the reactor comprising at least one heat exchanger (11), in particular a steam generator, set in the cold header to remove heat from the primary fluid via a secondary fluid; the heat exchanger (11) comprising a plurality of heat-exchange tubes (27), in which the secondary fluid circulates and which have respective substantially plane spiral portions (37) set on top of one another in a number of levels to form a substantially annular tube bundle (40); the reactor being **characterized in that** the heat exchanger (11) comprises a mechanical adjustable system (50) for pre-compression of the tube bundle (40), the spiral portions (37) being packed tight and compressed by pre-tensioned elastic pusher elements (51) acting on the spiral portions (37) and/or on supports (46) of the spiral portions (37) for clamping the tube bundle (40) axially.

2. A reactor according to Claim 1, wherein the heat exchanger extends along an axis (A) and the spiral portion (37) of each tube (27) is wound about the axis (A) and is formed by a plurality of substantially concentric turns (36), which lie in a common plane substantially perpendicular to the axis (A); and wherein set on each level is the spiral portion (37) of just one tube (27); or else set on each level are the spiral portions (37) of two or more tubes (27), the turns (36) of the various tubes (27) of the level being inserted inside one another so that the n-th turn of one tube is followed by the n-th turn of the next tube, and so forth.

3. A reactor according to any one of the preceding claims, wherein the tube bundle (40) delimits a substantially cylindrical central zone (17) that houses a supply duct (18), which is set substantially along the axis and is traversed substantially from the bottom upwards by the primary fluid entering the heat exchanger and coming from the hot header (6); and wherein the heat exchanger (11) is contained in the cold header (7) and is provided with a connection duct (12) that connects the supply duct (18) to the hot header (6); the primary fluid circulating from the hot header (6) through the connection duct (12) and coming out of the heat exchanger directly into the cold header (7).

4. A reactor according to any one of the preceding claims, wherein the heat exchanger (11) comprises conveying means (18-23) for conveying the primary fluid through the heat exchanger so that the primary fluid traverses the tube bundle substantially radially (40).

5. A reactor according to any one of the preceding claims, wherein the tube bundle (40) is housed in an annular zone (24) delimited by a radially inner side wall (21) and by a radially outer side wall (22), the inner and outer sidewalls (21,22) being substantially tubular and substantially coaxial and being provided with respective pluralities of radial through holes (23), of a casing (13) of the heat exchanger (11); and wherein the heat exchanger includes a controlled-failure safety system (95), comprising a plurality of tiles (66) or curved panels facing, at a pre-set distance, the walls (21, 22) and having holes (70) staggered with respect to the radial through holes (23) of the adjacent wall (21, 22); the tiles (66) being provided with punches (68) acting on pre-set mechanical resistance membranes (69) and being mobile for selectively close the holes (23) of the walls (21, 22) when a pressure higher than a critical threshold is exerted on the tiles (66).

6. A reactor according to Claim 5, wherein each heat-exchange tube (27) comprises a delivery branch (38) and a return branch (39), which are prevalently vertical and are connected respectively to a radially internal end and a radially external end of the spiral portion (37); the delivery branches (38) being arranged circumferentially alongside one another in a first gap defined between the tube bundle (40) and the external wall (22), and the return branches (39) are arranged circumferentially alongside one another in a second gap delimited between the tube bundle (40) and the internal wall (21).

7. A reactor according to any one of the preceding claims, wherein the spiral portions (37) are rigidly supported in a plurality of circumferential positions by respective radially arranged supports (46) angularly spaced apart from one another.

8. A reactor according to Claim 7, wherein each support (46) comprises a plurality of elements (47) set on top of one another to form a column that extends substantially throughout the whole height of the tube bundle (40); each element (47) being arranged between spiral portions (37) set at two consecutive levels, and having two series of seats (98) set on opposite faces of the element (47) and housing said spiral portions (37) set at consecutive levels.

9. A reactor according to any one of the preceding claims, wherein the heat exchanger (11) is provided with a primary fluid circulation pump (10), having an impeller (14) housed centrally within the heat exchanger (11) and a motor (15) set above a roof (3) of the reactor, the pump (10) being extractable from the heat exchanger (11).

10. A reactor according to any one of the preceding claims, wherein the heat exchanger (11) is connected to the hot header (6) via a connection duct (12), which is integral with a bottom end of the heat exchanger and is connected in a releasable way to the separation structure (5) by a portion (72) that projects radially from the heat exchanger (11).

11. A reactor according to Claim 10, wherein the portion (72) is mobile in a retracted position within the overall dimensions of the cross section of the heat exchanger (11).

12. A reactor according to Claim 11, wherein the connection duct (12) is connected to the separation structure (5) by means of a telescopic portion (72).

13. A reactor according to Claim 12, wherein the telescopic portion (72) is moved by a movement system (76), in particular a pantographic system, which enables a free end (75) of the telescopic portion (72) to approach/withdraw from the separation structure (5).

14. A reactor according to Claim 13, wherein the movement system (76) is at least partially immersed in the primary fluid and is configured in such a way as to keep the free end (75) of the telescopic portion (72) set up against the separation structure (5) as a result of the buoyant force of the primary fluid on the immersed part of the movement system (76).

15. A reactor according to any one of Claims 10 to 14, wherein the heat exchanger (11) is housed in an opening (99) that passes through the roof (3) of the reactor, and is extractable from the reactor through the opening (99); the connection duct (12) being dimensioned in such a way as to be extractable together with the heat exchanger (11) through the opening (99).

16. A reactor according to any one of the preceding claims, wherein the primary fluid (8) is a liquid metal and in particular a heavy liquid metal, for example lead, or a heavy-liquid-metal/bismuth eutectic, and the secondary fluid is water brought up to boiling point in the heat exchanger (11), which is a steam generator.

## Patentansprüche

1. Kernreaktor (1), insbesondere ein Flüssigmetall gekühlter Kernreaktor, der einen Warmsammler (6) über einem Kern (4) und einem Kaltsammler (7), der den Warmsammler umgibt, aufweist, die durch eine Trennstruktur (5) getrennt sind, und in denen ein Primärfluid (8) zum Kühlen des Kerns zirkuliert; wobei der Reaktor wenigstens einen Wärmetauscher (11) aufweist, insbesondere einen Dampfgenerator, der in den Kaltsammler eingesetzt ist, um Hitze von dem Primärfluid über ein Sekundärfluid zu entfernen; wobei der Wärmetauscher (11) mehrere Wärmetauschröhren (27) umfasst, in denen das Sekundärfluid zirkuliert und die jeweilige im Wesentlichen flache Spiralbereiche (37) aufweisen, die aufeinander in einer Anzahl von Höhen gesetzt sind, so dass sie ein im Wesentlichen ringförmiges Röhrenpaket (40) ausbilden;
wobei der Reaktor **dadurch gekennzeichnet ist, dass**
der Wärmetauscher (11) ein mechanisches einstellbares System (50) zum Vorkomprimieren des Röhrenpakets (40) umfasst, wobei die Spiralbereiche (37) eng gepackt sind und durch vorgespannte elastische Drückelemente (51) komprimiert sind, die auf die Spiralbereiche (37) und/oder auf Stützen (46) der Spiralbereiche (37) zum axialen Klemmen des Röhrenpakets (40) wirken.

2. Reaktor nach Anspruch 1, bei welchem der Wärmetauscher sich entlang einer Achse (A) erstreckt und der Spiralbereich (37) von jeder Röhre (27) um die Achse (A) gewunden ist und durch mehrere im Wesentlichen konzentrische Windungen (36) ausgebildet ist, die in einer gemeinsamen Ebene im Wesentlichen rechtwinklig zu der Achse (A) liegen; und bei welchem auf jeder Höhe der Spiralbereich (37) von nur einer Röhre (27) gesetzt ist; andernfalls auf jeder Höhe die Spiralbereiche (37) von zwei oder mehr Röhren (27) gesetzt sind, wobei die Windungen (36) der verschiedenen Röhren (27) der Höhe so ineinander eingefügt sind, dass die n-te Windung einer Röhre von der n-ten Windung der nächsten Röhre gefolgt wird und so weiter.

3. Reaktor nach einem der vorstehenden Ansprüche, bei welchem das Röhrenpaket (40) eine im Wesentlichen zylindrische zentrale Zone (17) begrenzt, die einen Versorgungsleitungskanal (18) aufnimmt, der im Wesentlichen entlang der Achse gesetzt ist und im Wesentlichen von unten nach oben von dem Primärfluid durchflossen wird, das in den Wärmetauscher eintritt und von dem Wärmeverteiler (6) kommt; und bei welchem der Wärmetauscher (11) in dem Kaltsammler (7) enthalten ist und mit einem Verbindungsleitungskanal (12) versehen ist, der den Versorgungsleitungskanal (18) mit dem Warmsammler (6) verbindet; wobei das Primärfluid von dem Warmsammler (6) durch den Verbindungsleitungskanal (12) zirkuliert und aus dem Wärmetauscher direkt in den Kaltsammler (7) kommt.

4. Reaktor nach einem der vorstehenden Ansprüche, bei welchem der Wärmetauscher (11) ein Fördermittel (18 - 23) zum Fördern des Primärfluids durch den Wärmetauscher umfasst, sodass das Primärfluid das Röhrenpaket im Wesentlichen radial (40) durchfließt.

5. Reaktor nach einem der vorstehenden Ansprüche, bei welchem das Röhrenpaket (40) in einer ringförmigen Zone (24) aufgenommen ist, die durch eine radial innere Seitenwand (21) und durch eine radial äußere Seitenwand (22) begrenzt ist, wobei die innere und die äußere Seitenwand (21, 22) im Wesentlichen röhrenförmig und im Wesentlichen koaxial sind und mit jeweiligen mehreren radialen Durchgangslöchern (23) versehen sind, eines Gehäuses (13) des Wärmetauschers (11); und bei welchem der Wärmetauscher ein Zwangsausfallsicherheitssystem (95) umfasst, das mehrere Platten (66) oder gebogene Platten umfasst, die in einem vorbestimmten Abstand der Wand (21, 22) gegenüberstehen und die Löcher (70) aufweisen, die bezüglich der radialen Durchgangslöcher (23) der in Nähe angeordneten Wand (21, 22) versetzt sind; wobei die Platten (66) mit Stempeln (68) versehen sind, die auf vorbestimmte mechanische Widerstandsmembranen (69) wirken und beweglich zum wahlweisen Schließen der Löcher (23) der Wände (21, 22) sind, wenn ein Druck auf die Platten (66) ausgeübt wird, der höher ist als ein kritischer Schwellwert.

6. Reaktor nach Anspruch 5, bei welchem jede Wärmetauschröhre (27) einen Lieferzweig (38) und einen Rücklaufzweig (39) umfasst, die überwiegend vertikal sind und mit einem radial inneren Ende bzw. einem radial äußeren Ende des Spiralbereichs (37) verbunden sind, wobei die Lieferzweige (38) umlaufend aneinander in einem ersten Spalt angeordnet sind, der zwischen dem Röhrenpaket (40) und der äußeren Wand (22) definiert ist, und die Rücklaufzweige (39) umlaufend aneinander in einem zweiten Spalt angeordnet sind, der zwischen dem Röhrenpaket (40) und der inneren Wand (21) begrenzt ist.

7. Reaktor nach einem der vorstehenden Ansprüche, bei welchem die Spiralbereiche (37) in mehreren umlaufenden Positionen durch jeweilige radial angeordnete Stützen (46) fest gestützt werden, die in ihren Winkeln zueinander getrennt angeordnet sind.

8. Reaktor nach Anspruch 7, bei welchem jede Stütze (46) mehrere Elemente (47) umfasst, die aufeinandergesetzt sind, so dass sie eine Säule ausbilden, die sich im Wesentlichen über die gesamte Höhe des Röhrenpakets (40) erstreckt, wobei jedes Element (47) zwischen Spiralbereichen (37) angeordnet ist, die auf zwei aufeinanderfolgende Höhen gesetzt sind, und zwei Reihen von Auflagen (98) aufweist, die auf entgegen gesetzte Seiten des Elements (47) gesetzt sind und die Spiralbereiche (37) aufnehmen, die auf aufeinanderfolgende Höhen gesetzt sind.

9. Reaktor nach einem der vorstehenden Ansprüche, bei welchem der Wärmetauscher (11) mit einer Primärfluid-Zirkulationspumpe (10) versehen ist, die ein Laufrad (14) aufweist, das zentral in dem Wärmetauscher (11) aufgenommen ist, und einen Motor (15) aufweist, der über ein Dach (3) des Reaktors gesetzt ist, wobei die Pumpe (10) aus dem Wärmetauscher (11) ausziehbar ist.

10. Reaktor nach einem der vorstehenden Ansprüche, bei welchem der Wärmetauscher (11) mit dem Warmsammler (6) über einen Verbindungsleitungskanal (12) verbunden ist, der einstückig mit einem unteren Ende des Wärmetauschers ist und auf lösbare Weise mit der Trennstruktur (5) durch einen Bereich (72) verbunden ist, der radial von dem Wärmetauscher (11) hervorsteht.

11. Reaktor nach Anspruch 10, bei welchem der Bereich (72) in eine zurückgezogene Position in den gesamten Abmessungen des Querschnitts des Wärmetauschers (11) beweglich ist.

12. Reaktor nach Anspruch 11, bei welchem der Verbindungsleitungskanal (12) mit der Trennstruktur (5) durch einen teleskopierenden Bereich (72) verbunden ist.

13. Reaktor nach Anspruch 12, bei welchem der teleskopierende Bereich (72) durch ein Bewegungssystem (76) bewegt wird, insbesondere ein pantographisches System, das einem freien Ende (75) des teleskopierenden Bereichs (72) gestattet, sich von der Trennstruktur (5) anzunähern/zurückzuziehen.

14. Reaktor nach Anspruch 13, bei welchem das Bewegungssystem (76) wenigstens teilweise in das Primärfluid eingetaucht ist, und so konfiguriert ist, dass das freie Ende (75) des teleskopierenden Bereichs (72) gegen die Trennstruktur (5) angesetzt ist, als Ergebnis der Auftriebskraft des Primärfluids auf den eingetauchten Teil des Bewegungssystems (76).

15. Reaktor nach einem der Ansprüche 10 bis 14, bei welchem der Wärmetauscher (11) in einer Öffnung (99) aufgenommen ist, die durch das Dach (3) des Reaktors verläuft, und aus dem Reaktor durch die Öffnung (99) ausziehbar ist; wobei der Verbindungsleitungskanal (12) so bemessen ist, dass er mit dem Wärmetauscher (11) durch die Öffnung (99) ausziehbar ist.

16. Reaktor nach einem der vorstehenden Ansprüche, bei welchem das Primärfluid (8) ein flüssiges Metall und insbesondere ein schweres flüssiges Metall ist, zum Beispiel Blei, oder ein schweres flüssiges Metall/Wismuth-Eutektikum, und das Sekundärfluid Wasser ist, das in dem Wärmetauscher (11), der ein Dampfgenerator ist, auf den Siedepunkt gebracht wird.

## Revendications

1. Réacteur nucléaire (1), en particulier réacteur nucléaire refroidi par métal liquide, comportant un collecteur chaud (6) au-dessus d'un coeur (4) et un collecteur froid (7) entourant le collecteur chaud, séparés par une structure de séparation (5), et dans lequel un fluide primaire (8) circule pour refroidir le coeur ; le réacteur comprenant au moins un échangeur de chaleur (11), en particulier un générateur de vapeur, disposé dans le collecteur froid de façon à retirer de la chaleur à partir du fluide primaire par l'intermédiaire d'un fluide secondaire ; l'échangeur de chaleur (11) comprenant une pluralité de tubes d'échange de chaleur (27), dans lesquels circule le fluide secondaire, et qui comportent des parties en spirale sensiblement planes respectives (37) disposées les unes sur les autres en un certain nombre de niveaux de façon à former un faisceau de tubes sensiblement annulaire (40) ;
le réacteur étant **caractérisé en ce que** :
l'échangeur de chaleur (11) comprend un système mécanique réglable (50) pour la pré-compression du faisceau de tubes (40), les parties en spirale (37) étant étroitement compactées et comprimées par des éléments pousseurs élastiques pré-tendus (51) agissant sur les parties en spirale (37) et/ou sur des supports (46) des parties en spirale (37) pour serrer axialement le faisceau de tubes (40).

2. Réacteur selon la revendication 1, dans lequel l'échangeur de chaleur s'étend le long d'un axe (A) et la partie en spirale (37) de chaque tube (27) est enroulée autour de l'axe (A) et est constituée par une pluralité de spires sensiblement concentriques (36), qui se trouvent dans un plan commun sensiblement perpendiculaire à l'axe (A) ; et dans lequel, disposée sur chaque niveau, se trouve la partie en spirale (37) d'un seul tube ; ou, d'une autre façon, disposées sur chaque niveau, se trouvent les parties en spirale (37) de deux ou de plusieurs tubes (27), les spires (36) des différents tubes (27) du niveau étant insérées les unes à l'intérieur des autres de telle sorte que la n^{ème} spire d'un tube soit suivie par la n^{ème} spire du tube suivant, et ainsi de suite.

3. Réacteur selon l'une quelconque des revendications précédentes, dans lequel le faisceau de tubes (40) délimite une zone centrale sensiblement cylindrique (17) qui renferme un conduit d'alimentation (18), qui est disposé sensiblement le long de l'axe et qui est traversé sensiblement de bas en haut par le fluide primaire entrant dans l'échangeur de chaleur et venant du collecteur chaud (6) ; et dans lequel l'échangeur de chaleur (11) est contenu dans le collecteur froid (7), et est muni d'un conduit de raccordement (12), qui relie le conduit d'alimentation (18) au collecteur chaud (6) ; le fluide primaire circulant à partir du collecteur chaud (6) à travers le conduit de raccordement (12) et sortant de l'échangeur de chaleur directement dans le collecteur froid (7).

4. Réacteur selon l'une quelconque des revendications précédentes, dans lequel l'échangeur de chaleur (11) comprend des moyens de convoyage (18 à 23) pour convoyer le fluide primaire à travers l'échangeur de chaleur de telle sorte le fluide primaire traverse le faisceau de tubes de façon sensiblement radiale (40).

5. Réacteur selon l'une quelconque des revendications précédentes, dans lequel le faisceau de tubes (40) est renfermé dans une zone annulaire (24) délimitée par une paroi latérale radialement intérieure (21) et par une paroi latérale radialement extérieure (22), les parois latérales intérieure et extérieure (21, 22) étant sensiblement tubulaires et sensiblement coaxiales et étant munies de pluralités respectives de trous traversants radiaux (23), d'une enceinte (13) de l'échangeur de chaleur (11) ; et dans lequel l'échangeur de chaleur comprend un système de sécurité à défaillance contrôlée (95), comprenant une pluralité de tuiles (66) ou de panneaux incurvés faisant face, à une distance pré-établie, aux parois (21, 22), et comportant des trous (70) échelonnés vis-à-vis des trous traversants radiaux (23) de la paroi adjacente (21, 22) ; les tuiles (66) étant munies de poinçons (68) agissant sur des membranes à résistance mécanique pré-établie (69) et étant mobiles de façon à fermer de façon sélective les trous (23) des parois (21, 22) lorsqu'une pression supérieure à un seuil critique est exercée sur les tuiles (66).

6. Réacteur selon la revendication 5, dans lequel chaque tube d'échange de chaleur (27) comprend une branche de distribution (38) et une branche de retour (39), qui sont principalement verticales et qui sont reliées, respectivement à une extrémité radialement intérieure et à une extrémité radialement extérieure de la partie en spirale (37) ; les branches de distribution (38) étant disposées de façon circonférentielle les unes le long des autres dans un premier espace défini entre le faisceau de tubes (40) et la paroi extérieure (22), et les branches de retour (39) étant disposées de façon circonférentielle les unes le long des autres dans un deuxième espace délimité entre le faisceau de tubes (40) et la paroi intérieure (21).

7. Réacteur selon l'une quelconque des revendications précédentes, dans lequel les parties en spirale (37) sont rigidement supportées dans une pluralité de positions circonférentielles par des supports disposés radialement respectifs (46) espacés de façon angulaire les uns des autres.

8. Réacteur selon la revendication 7, dans lequel chaque support (46) comprend une pluralité d'éléments (47) disposés les uns sur les autres de façon à former une colonne qui s'étend sensiblement sur la totalité de la hauteur du faisceau de tubes (40) ; chaque élément (47) étant disposé entre des parties en spirale (37) disposées à deux niveaux consécutifs, et comportant deux séries de sièges (98) disposés sur des faces opposées de l'élément (47) et renfermant lesdites parties en spirale (37) disposés à des niveaux consécutifs.

9. Réacteur selon l'une quelconque des revendications précédentes, dans lequel l'échangeur de chaleur (11) est muni d'une pompe de circulation de fluide primaire (10), comportant une hélice (14) renfermée de façon centrale à l'intérieur de l'échangeur de chaleur (11) et un moteur (15) disposé au-dessus d'un toit (3) du réacteur, la pompe (10) pouvant être extraite de l'échangeur de chaleur (11).

10. Réacteur selon l'une quelconque des revendications précédentes, dans lequel l'échangeur de chaleur (11) est relié au collecteur chaud (6) par l'intermédiaire d'un conduit de raccordement (12), qui est intégré à une extrémité inférieure de l'échangeur de chaleur et qui est relié d'une façon libérable à la structure de séparation (5) par une partie (72) qui fait saillie radialement à partir de l'échangeur de chaleur (11).

11. Réacteur selon la revendication 10, dans lequel la partie (72) est mobile dans une position rétractée à l'intérieur des dimensions globales de la section transversale de l'échangeur de chaleur (11).

12. Réacteur selon la revendication 11, dans lequel le conduit de raccordement (12) est relié à la structure de séparation (5) à l'aide d'une partie télescopique (72).

13. Réacteur selon la revendication 12, dans lequel la partie télescopique (72) est déplacée par un système de déplacement (76), en particulier un système de pantographe, qui permet à une extrémité libre (75) de la partie télescopique (72) de se rapprocher/se séparer de la structure de séparation (5).

14. Réacteur selon la revendication 13, dans lequel le système de déplacement (76) est au moins partiellement immergé dans le fluide primaire et est configuré de façon à maintenir l'extrémité libre (75) de la partie télescopique (72) disposée contre la structure de séparation (5) en résultat de la force de flottaison du fluide primaire sur la partie immergée du système de déplacement (76).

15. Réacteur selon l'une quelconque des revendications 10 à 14, dans lequel l'échangeur de chaleur (11) est renfermé dans une ouverture (99) qui traverse le toit (3) du réacteur, et peut être extrait du réacteur à travers l'ouverture (99) ; le conduit de raccordement (12) étant dimensionné de façon à pouvoir être extrait avec l'échangeur de chaleur (11) à travers l'ouverture (99).

16. Réacteur selon l'une quelconque des revendications précédentes, dans lequel le fluide primaire (8) est un métal liquide, et en particulier un métal lourd liquide, par exemple le plomb, ou un eutectique bismuth/métal lourd liquide, et le fluide secondaire est de l'eau amenée au point d'ébullition dans l'échangeur de chaleur (11), qui est un générateur de vapeur.
